# FASCICULE DE BREVET EUROPEEN

(11) **EP 2 416 137 B1**
(45) Date de publication et mention de la délivrance du brevet: **15.03.2017**
(21) Numéro de dépôt: 11175993.2
(22) Date de dépôt: 29.07.2011
(51) Int. Cl.: G01K 1/14, G01K 1/16, G01K 7/04

(54) **Dispositif de mesure de la température d'un substrat**
Vorrichtung zur Temperaturmessung eines Substrats
Device for measuring the temperature of a substrate

(30) Priorité: 05.08.2010 FR 1056451
(43) Date de publication de la demande: 08.02.2012
(73) Titulaire: Airbus Defence and Space SAS, 78130 Les Mureaux (FR)
(72) Inventeur: Flemin, Christian, 31280 DREMIL LAFAGE (FR)
(74) Mandataire: Cabinet Plasseraud

(56) Documents cités:
- US-A- 3 364 078
- US-A- 3 901 080
- US-A- 4 416 553
- US-A1- 2004 037 350
- US-B1- 6 257 758

## Description

L'invention concerne un dispositif de mesure de la température d'un substrat, et en particulier un dispositif de mesure de la température d'un substrat qui rayonne dans le spectre infrarouge vers un environnement radiatif externe lorsqu'il existe une grande différence de température entre l'environnement radiatif externe et ledit substrat.

Des dispositifs de mesure de température sont connus notamment des documents US 2004/037350, US 4,416,553, US 3,901,080, US 6,257,758, US 3,364,078.

L'un des problèmes des charges utiles de type électronique embarquées sur des satellites en environnement spatial est la dissipation de la chaleur produite par la charge utile.

Dans le cas, par exemple, d'un satellite de télécommunications, la charge utile comporte fréquemment des tubes à ondes progressives ("TOP" ou "TWT" pour « Traveling-Wave Tube » en langue anglaise), destinés à une amplification du signal à transmettre avec un très faible bruit de fond. Or ces tubes à ondes progressives dégagent une grande quantité de chaleur, qui doit être dissipée, pour éviter une élévation de température de la charge utile et du TWT lui-même mettant en danger son fonctionnement correct. Dans le cas de TWT radiatifs, le collecteur est refroidi grâce à un radiateur externe qui rayonne dans le spectre infrarouge directement vers un environnement radiatif externe plus froid. Le collecteur de ces tubes radiatifs à ondes progressives peut atteindre une température de l'ordre de 200°C suivant son mode de fonctionnement, alors que le tube lui-même présente une température de quelques dizaines de °C.

La capacité de dissipation thermique d'un tube à ondes progressives est alors un élément dimensionnant de la puissance de la charge utile.

Avant de lancer le satellite, des tests de dissipation thermique de la charge utile sont réalisés au sol dans une chambre de test dans un environnement simulant les conditions rencontrées dans l'espace, et en particulier, avec des simulations d'environnement très froid ou très chaud.

Lors de ces tests, les tubes radiatifs à ondes progressives sont équipés de plusieurs capteurs de température et notamment de capteurs de température de type thermocouple sur le radiateur. Ces capteurs sont fixés avec de la colle sur une plaquette métallique.

Toutefois, ces capteurs mesurent la température de surface du radiateur avec des erreurs importantes typiquement 45°C lorsque les collecteurs des tubes à ondes progressives présentent une température de 150°C dans une chambre de test à -50°C : ces erreurs viennent du fait que le thermocouple mesure sa propre température et que la température de la jonction (ou soudure) du thermocouple s'équilibre entre la température du substrat mesuré et l'environnement radiatif externe. La fuite conductive dans les fils du thermocouple est le principal contributeur à l'erreur de mesure.

Le but de la présente invention est de proposer un dispositif capable de mesurer avec précision la température d'un substrat, et notamment de mesurer avec précision la température d'un substrat qui rayonne dans le spectre infrarouge vers un environnement radiatif externe lorsqu'il existe une grande différence de température entre l'environnement radiatif et ledit substrat.

A cet effet, l'invention a pour objet un dispositif de mesure de la température d'un substrat comprenant :
- un thermocouple comprenant des fils électriques joints l'un à l'autre à au moins une jonction;
- un élément de fixation propre à fixer ladite jonction audit substrat pour mesurer sa température ;
caractérisé en ce que l'élément de fixation comporte un élément thermiquement conducteur propre à porter une portion de fils électriques adjacente à ladite jonction; ledit élément thermiquement conducteur étant apte à mettre en contact thermique ladite portion de fils électriques avec ledit substrat-et en ce que ledit élément de fixation comprend une embase thermiquement conductrice propre à porter ladite jonction, et dans lequel l'élément thermiquement conducteur comprend une patte élastique fixée à ladite embase ; ladite patte élastique étant propre à exercer une pression sur ladite jonction.

Avantageusement, ce dispositif de mesure permet de maintenir une longueur prédéfinie des fils électriques du thermocouple située à proximité de la jonction du thermocouple matérialisée par la soudure, à une température proche de la température du substrat dont on souhaite mesurer la température de surface dans le but de limiter la fuite conductive entre la jonction et les fils du thermocouple.

Avantageusement, ce dispositif de mesure peut être retiré facilement du radiateur des tubes radiatifs à ondes progressives, après les tests de qualification du satellite au sol.

Avantageusement, ce dispositif de mesure n'abîme pas le collecteur des tubes radiatifs à ondes progressives et, en particulier, ne laisse pas de trace de colle sur celui-ci.

Avantageusement, ce dispositif de mesure permet de maintenir la fixation de la jonction du thermocouple contre le radiateur dans un environnement radiatif externe dont la température varie sur une grande plage de valeurs.

Avantageusement, ce dispositif de mesure est peu encombrant, de plus sa mise à oeuvre et son démontage est simple. En particulier, il est apte à être fixé sur une faible surface du radiateur des tubes radiatifs à ondes progressives pour les tests au sol. Ainsi, il ne bloque pas ou peu le rayonnement du radiateur vers l'environnement radiatif externe permettant le refroidissement du collecteur du tube. En conséquence, ce dispositif de mesure ne modifie pas l'environnement du radiateur ainsi que le comportement thermique de celui-ci et permet ainsi de mesurer une température qui reflète avec précision la température du radiateur pendant les tests au sol avec une erreur inférieure à 3°C environ. Lorsque le satellite sera envoyé dans l'espace, les tubes radiatifs ne comporteront plus de dispositif de mesure de type thermocouple et leur intégrité mécanique ne sera pas modifiée.

Avantageusement, ce dispositif de mesure peut être utilisé immédiatement après sa fixation au substrat. Il n'est pas besoin d'attendre que la colle de fixation de la jonction au dispositif de mesure, polymérise ; le temps de polymérisation de la colle étant réalisé lors de la fabrication du dispositif de mesure.

Suivant des modes particuliers de réalisation, le dispositif de mesure comporte l'une ou plusieurs des caractéristiques suivantes :
- ladite portion de fils électriques présente une longueur comprise entre environ 30 mm et environ 70 mm,
- le dispositif de mesure comprend un élément de protection apte à isoler ladite portion de fils électriques de l'environnement radiatif externe,
- ledit élément de protection est apte à fixer ladite portion de fils électriques audit élément thermiquement conducteur,
- ledit élément de protection est réalisé dans un matériau thermiquement conducteur pour réaliser le pontage conductif entre ladite portion de fils électriques et ledit élément thermiquement conducteur,
- ledit élément de protection comprend une bande adhésive,
- ledit élément thermiquement conducteur est réalisé dans un matériau apte à l'isoler des échanges radiatifs avec l'environnement externe, et dans lequel au moins une partie dudit élément thermiquement conducteur recouvre au moins une partie de ladite portion de fils électriques pour les isoler contre lesdits échanges radiatifs avec l'environnement externe,
- ledit élément thermiquement conducteur comprend un élément de support qui s'étend en porte-à-faux, ledit élément de support étant propre à porter au moins une partie de ladite portion de fils électriques,
- ledit matériau thermiquement conducteur est réalisé dans un matériau parmi l'aluminium, les alliages d'aluminium, le cuivre et les alliages de cuivre,
- l'embase est couplée thermiquement avec la jonction et le substrat, ladite embase étant électriquement isolée de ladite jonction par une colle,
- ladite patte élastique est coudée au moins deux fois,
- ladite patte élastique comprend une première partie de patte fixée de façon amovible à l'embase et au substrat, et une seconde partie de patte formant l'élément de support, et
- la seconde partie de patte est entourée par une boucle aplatie de fils électriques et par ledit élément de protection pour former une gaine ayant une température homogène.

L'invention sera mieux comprise à la lecture de la description qui va suivre, donnée uniquement à titre d'exemple, non limitative, en se référant aux dessins sur lesquels :
- la figure 1 est une vue schématique en coupe d'un dispositif de mesure selon un premier mode de réalisation de l'invention ; et
- la figure 2 est une vue schématique en perspective du dispositif de mesure illustré sur la figure 1.

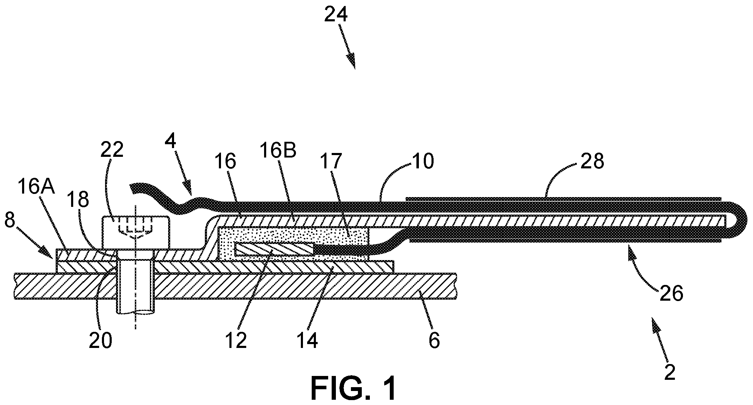

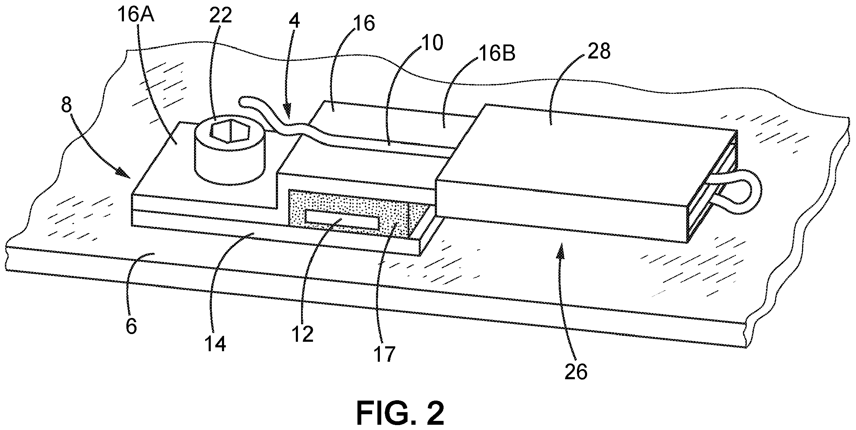

En référence aux figures 1 et 2, le dispositif de mesure 2 selon l'invention, comporte un thermocouple 4 propre à mesurer la température d'un substrat 6 et un élément de fixation 8 d'une partie du thermocouple 4 audit substrat 6.

Le thermocouple 4, représenté uniquement partiellement, comprend deux fils électriques 10 dont les extrémités sont reliées l'une à l'autre par deux jonctions. Ces fils électriques 10 sont réalisés dans des métaux ou alliages métalliques différents tels que, par exemple, le couple de matériaux (Cuivre, Constantan) ou le couple de matériaux (Chromel, Alumel). Le thermocouple 4 génère, par effet Seebeck, une différence de potentiel qui dépend de la différence de température entre les deux jonctions. Pour mesurer une température de surface inconnue, l'une des deux jonctions est maintenue à une température connue, l'autre jonction 12 matérialisée par la soudure étant en contact avec la surface du substrat 6 dont il faut mesurer la température de surface.

Le substrat 6 est, par exemple, un élément de refroidissement de composants électroniques, tel qu'un tube radiatif à ondes progressives monté sur un satellite. Le substrat 6 peut être disposé dans un environnement radiatif externe, dont la température varie dans une plage de température très large typiquement entre -173°C et jusqu'à environ 130°C telle que, par exemple, dans une chambre de test.

L'élément de fixation 8 est propre à fixer la jonction 12 audit substrat 6.

A cet effet, l'élément de fixation 8 comprend une embase 14 propre à porter la jonction 12, et une patte élastique 16 apte à porter une portion de fils électriques 10 adjacente à la jonction.

L'embase 14 est, par exemple, constituée par une plaquette. La jonction 12 est collée à l'embase 14 par de la colle 17 électriquement isolante et thermiquement conductrice.

L'embase 14 est réalisée dans un matériau thermiquement conducteur afin que la jonction 12 mesure une température la plus proche possible de la température du substrat 6. Ce matériau est, par exemple, de l'aluminium, des alliages d'aluminium, du cuivre ou des alliages de cuivre.

La patte élastique 16 est également réalisée dans un matériau thermiquement conducteur. Elle forme, de ce fait, un élément thermiquement conducteur. Elle est en contact thermique avec le substrat 6 pour maintenir la température de la portion de fils électriques 10 la plus proche possible de la température du substrat 6 et ainsi assurer une mesure précise de la température du substrat en limitant la fuite conductive entre la jonction 12 et la portion de fils électriques 10 adjacente à la jonction 12.

Selon le mode de réalisation représenté, la patte élastique 16 est en contact avec l'embase 14 qui est, elle-même, en contact avec le substrat 6.

En variante, la patte élastique 16 peut être directement en contact avec le substrat 6. L'important est ici de créer un lien thermique entre le substrat 6 et la portion de fils électriques 10 adjacente à la jonction 12.

L'embase 14 et la patte élastique 16 sont munies chacune d'un orifice traversant 18 et respectivement 20, traversé par une vis 22 apte à être vissée dans le substrat 6 pour fixer le dispositif de mesure 2 au substrat 6.

La patte élastique 16 est réalisée dans un matériau apte à protéger la portion de fils électriques 10 située entre le substrat 6 et la patte élastique 16 par rapport aux échanges radiatifs avec l'environnement externe. Ces échanges radiatifs sont représentés schématiquement, sur la figure 1, par une flèche 24.

La patte élastique 16 est deux fois coudée de manière à constituer une marche d'escalier au-dessous de laquelle la jonction 12 est collée. Ainsi, la patte élastique 16 exerce une légère pression sur la jonction 12 qui favorise le plaquage de celle-ci sur l'embase 14 et augmente le couplage conductif entre jonction 12 et l'embase 14.

La patte élastique 16 comprend un élément de support 26 qui s'étend en porte-à-faux par rapport à l'embase 14. Cet élément de support 26 est propre à porter la portion de fils électriques 10.

Plus précisément, la patte élastique 16 comprend une première partie de patte 16A fixée de façon amovible à l'embase 14 et au substrat 6, deux coudes, et une seconde partie de patte 16B formant l'élément de support 26.

Ainsi, avantageusement la surface du substrat 6 en regard de l'élément support 26 reste une surface propre à rayonner vers l'environnement radiatif externe pour refroidir le substrat.

La portion de fils électriques 10 est fixée autour de l'élément de support 26 à l'aide d'une bande adhésive 28 enroulée autour d'une boucle aplatie de fils électriques entourant l'élément de support 26.

La bande adhésive 28 est lissée à l'aide d'un outil, sur les fils électriques 10 afin de créer un manchon ou une gaine propre à résister au décollement dans un environnement de température extrême. Ce lissage permet d'enlever les bulles d'air et d'éviter un décollement de la bande adhésive 28 lorsque la température environnante est très élevée.

La bande adhésive 28 est réalisée dans un matériau thermiquement conducteur, permettant l'isolation radiative par rapport à l'environnement extérieur et présentant une faible émissivité infrarouge, tel que l'aluminium ou un alliage d'aluminium. Le lissage permet aussi de rendre la surface de la bande adhésive 28 réfléchissante et de réduire son émissivité infrarouge.

La portion de fils électriques 10 portée par la patte élastique 16 présente une longueur comprise entre environ 30 mm et environ 70 mm.

## Revendications

1. Dispositif de mesure (2) de la température d'un substrat (6) comprenant :
- un thermocouple (4) comprenant des fils électriques (10) joints l'un à l'autre à au moins une jonction (12) ;
- un élément de fixation (8) propre à fixer ladite jonction (12) audit substrat (6) pour mesurer sa température; l'élément de fixation (8) comportant un élément thermiquement conducteur (16) propre à porter une portion de fils électriques (10) adjacente à ladite jonction (12) ; ledit élément thermiquement conducteur (16) étant apte à mettre en contact thermique ladite portion de fils électriques (10) avec ledit substrat (6) ;
**caractérisé en ce que** ledit élément de fixation (8) comprend une embase (14) thermiquement conductrice propre à porter ladite jonction (12), et dans lequel l'élément thermiquement conducteur (16) comprend une patte élastique fixée à ladite embase (14) ; ladite patte élastique (16) étant propre à exercer une pression sur ladite jonction (12).

2. Dispositif de mesure (2 ; 30) selon la revendication 1, dans lequel ladite portion de fils électriques (10) présente une longueur comprise entre environ 30 mm et environ 70 mm.

3. Dispositif de mesure (2) selon l'une quelconque des revendications 1 à 2, qui comprend un élément de protection (28) apte à isoler ladite portion de fils électriques (10) de l'environnement radiatif externe (24).

4. Dispositif de mesure (2) selon la revendication 3, dans lequel ledit élément de protection (28) est apte à fixer ladite portion de fils électriques (10) audit élément thermiquement conducteur (16).

5. Dispositif de mesure (2) selon la revendication 3 et 4, dans lequel ledit élément de protection (28) est réalisé dans un matériau thermiquement conducteur pour réaliser le pontage conductif entre ladite portion de fils électriques (10) et ledit élément thermiquement conducteur (16).

6. Dispositif de mesure (2) selon l'une quelconque des revendications 3 à 5, dans lequel ledit élément de protection (28) comprend une bande adhésive.

7. Dispositif de mesure (2) selon l'une quelconque des revendications 1 à 6, dans lequel ledit élément thermiquement conducteur (16) est réalisé dans un matériau apte à l'isoler des échanges radiatifs avec l'environnement externe (24), et dans lequel au moins une partie dudit élément thermiquement conducteur (16) recouvre au moins une partie de ladite portion de fils électriques (10) pour les isoler contre lesdits échanges radiatifs avec l'environnement externe (24).

8. Dispositif de mesure (2) selon l'une quelconque des revendications 1 à 7, dans lequel ledit élément thermiquement conducteur (16) comprend un élément de support (26) qui s'étend en porte-à-faux, ledit élément de support (26) étant propre à porter au moins une partie de ladite portion de fils électriques (10).

9. Dispositif de mesure (2) selon l'une quelconque des revendications 1 à 8, dans lequel ledit élément thermiquement conducteur (16) est réalisé dans un matériau parmi l'aluminium, les alliages d'aluminium, le cuivre et les alliages de cuivre.

10. Dispositif de mesure (2) selon l'une quelconque des revendications 1 à 9, dans lequel l'embase (14) est couplée thermiquement avec la jonction (12) et le substrat (6), ladite embase (14) étant électriquement isolée de ladite jonction (12) par une colle (17).

11. Dispositif de mesure (2) selon l'une quelconque des revendications 1 et 10, dans lequel ladite patte élastique (16) est coudée au moins deux fois.

12. Dispositif de mesure (2) selon l'une quelconque des revendications 1 à 11, dans lequel ladite patte élastique (16) comprend une première partie de patte (16A) fixée de façon amovible à l'embase (14) et au substrat (16), et une seconde partie de patte (16B) formant l'élément de support (26).

13. Dispositif de mesure (2) selon la revendication 12, dans lequel la seconde partie de patte (16B) est entourée par une boucle aplatie de fils électriques (10) et par ledit élément de protection (28) pour former une gaine ayant une température homogène.

## Patentansprüche

1. Vorrichtung (2) zum Messen der Temperatur eines Substrats (6), umfassend:
- ein Thermoelement (4), umfassend elektrische Drähte (10), die miteinander an mindestens einer Verbindung (12) verbunden sind;
- ein Befestigungselement (8), das geeignet ist, die Verbindung (12) an dem Substrat (6) zu befestigen, um seine Temperatur zu messen; wobei das Befestigungselement (8) ein thermisch leitendes Element (16) umfasst, das geeignet ist, einen Abschnitt von elektrischen Drähten (10) zu tragen, der an die Verbindung (12) angrenzt; wobei das thermisch leitende Element (16) geeignet ist, den Abschnitt von elektrischen Drähten (10) mit dem Substrat (6) in thermischen Kontakt zu bringen;
**dadurch gekennzeichnet, dass** das Befestigungselement (8) einen thermisch leitenden Sockel (14) umfasst, der geeignet ist, die Verbindung (12) zu tragen, und wobei das thermisch leitende Element (16) eine elastische Klaue umfasst, die am Sockel (14) befestigt ist; wobei die elastische Klaue (16) geeignet ist, einen Druck auf die Verbindung (12) auszuüben.

2. Messvorrichtung (2; 30) nach Anspruch 1, bei der der Abschnitt von elektrischen Drähten (10) eine Länge zwischen ungefähr 30 mm und ungefähr 70 mm aufweist.

3. Messvorrichtung (2) nach einem der Ansprüche 1 bis 2, die ein Schutzelement (28) umfasst, das geeignet ist, den Abschnitt von elektrischen Drähten (10) gegen die äußere Strahlungsumgebung (24) zu isolieren.

4. Messvorrichtung (2) nach Anspruch 3, bei der das Schutzelement (28) geeignet ist, den Abschnitt von elektrischen Drähten (10) an dem thermisch leitenden Element (16) zu befestigen.

5. Messvorrichtung (2) nach Anspruch 3 und 4, bei der das Schutzelement (28) aus einem thermisch leitenden Material hergestellt ist, um die Überbrückungsleitung zwischen dem Abschnitt von elektrischen Drähten (10) und dem thermisch leitenden Element (16) zu verwirklichen.

6. Messvorrichtung (2) nach einem der Ansprüche 3 bis 5, bei der das Schutzelement (28) einen Haftstreifen umfasst.

7. Messvorrichtung (2) nach einem der Ansprüche 1 bis 6, bei der das thermisch leitende Element (16) aus einem Material hergestellt ist, das geeignet ist, es gegen Strahlungsaustausch mit der äußeren Umgebung (24) zu isolieren, und bei der mindestens ein Teil des thermisch leitenden Elements (16) mindestens einen Teil des Abschnitts von elektrischen Drähten (10) bedeckt, um sie gegen den Strahlungsaustausch mit der äußeren Umgebung (24) zu isolieren.

8. Messvorrichtung (2) nach einem der Ansprüche 1 bis 7, bei der das thermisch leitende Element (16) ein Stützelement (26) umfasst, das sich überstehend erstreckt, wobei das Stützelement (26) geeignet ist, mindestens einen Teil des Abschnitts von elektrischen Drähten (10) zu tragen.

9. Messvorrichtung (2) nach einem der Ansprüche 1 bis 8, bei der das thermisch leitende Element (16) aus einem Material ausgewählt aus Aluminium, Aluminiumlegierungen, Kupfer und Kupferlegierungen hergestellt ist.

10. Messvorrichtung (2) nach einem der Ansprüche 1 bis 9, bei der der Sockel (14) thermisch mit der Verbindung (12) und dem Substrat (6) gekoppelt ist, wobei der Sockel (14) elektrisch von der Verbindung (12) durch einen Klebstoff (17) isoliert ist.

11. Messvorrichtung (2) nach einem der Ansprüche 1 und 10, bei der die elastische Klaue (16) mindestens zweimal geknickt ist.

12. Messvorrichtung (2) nach einem der Ansprüche 1 bis 11, bei der die elastische Klaue (16) einen ersten Klauenteil (16A), der abnehmbar am Sockel (14) und am Substrat (16) befestigt ist, und einen zweiten Klauenteil (16B), der das Stützelement (26) bildet, umfasst.

13. Messvorrichtung (2) nach Anspruch 12, bei der der zweite Klauenteil (16B) von einer abgeflachten Schleife von elektrischen Drähten (10) und von dem Schutzelement (28) umgeben ist, um einen Mantel mit einer homogenen Temperatur zu bilden.

## Claims

1. Device (2) for measuring the temperature of a substrate (6) comprising:
- a thermocouple (4) comprising electric wires (10) joined to each other at least one junction (12);
- a fixing element (8) suitable for fixing said junction (12) to said substrate (6) in order to measure its temperature; the fixing element (8) comprising a thermally conductive element (16) suitable for bearing a portion of electric wires (10) adjacent to said junction (12); said thermally conductive element (16) being capable of bringing said portion of electric wires (10) into thermal contact with said substrate (6);
**Characterized in that** said fixing element (8) comprises a thermally conductive support (14) suitable for bearing said junction (12), and in which the thermally conductive element (16) comprises a flexible lug fixed to said support (14); said flexible lug (16) being suitable for exerting a pressure on said junction (12).

2. Measuring device (2) according to claim 1, in which said portion of electric wires (10) has a length comprised between approximately 30 mm and approximately 70 mm.

3. Measuring device (2) according to any of claims 1 and 2, which comprises a protective element (28) capable of insulating said portion of electric wires (10) from the external radiative environment (24).

4. Measuring device (2) according to claim 3, in which said protective element (28) is capable of fixing said portion of electric wires (10) to said thermally conductive element (16).

5. Measuring device (2; 30) according to claims 3 and 4, in which said protective element (28) is made of a thermally conductive material in order to produce the conductive bridge between said portion of electric wires (10) and said thermally conductive element (16).

6. Measuring device (2) according to any of claims 3 to 5, in which said protective element (28) comprises an adhesive strip.

7. Measuring device (2) according to any of claims 1 to 6, in which said thermally conductive element (16) is made of a material capable of insulating it from radiative exchanges with the external environment (24), and in which at least a part of said thermally conductive element (16) covers at least a part of said portion of electric wires (10) in order to insulate them against said radiative exchanges with the extemal environment (24).

8. Measuring device (2) according to any of the claims 1 to 7, in which said thermally conductive element (16) comprises a projecting support element (26), said support element (26) being suitable for bearing at least a part of said portion of electric wires (10).

9. Measuring device (2) according to any of claims 1 to 8, in which said thermally conductive element (16) is made of a material chosen from aluminium, aluminium alloys, copper and copper alloys.

10. Measuring device (2) according to any of the claims 1 to 9, in which the support (14) is thermally coupled to the junction (12) and the substrate (6), said support (14) being electrically insulated from said junction (12) by a glue (17).

11. Measuring device (2) according to any of the claims 1 to 10, in which said flexible lug (16) is bent at least twice.

12. Measuring device (2) according to any of the claims 1 to 11, in which said flexible lug (16) comprises a first lug part (16A) detachably fixed to the support (14) and to the substrate (16), and a second lug part (16B) forming the support element (26).

13. Measuring device (2) according to claim 12, in which the second lug part (16B) is surrounded by a flattened loop of electric wires (10) and by said protective element (28) in order to form a sheath having a homogeneous temperature.
